(19) Europäisches Patentamt
European Patent Office
Office européen des brevets

(11) **EP 2 812 656 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(51) Int Cl.:
*G01D 7/00* *(2006.01)*        *G01N 25/72* *(2006.01)*

(21) Anmeldenummer: **13730512.4**

(86) Internationale Anmeldenummer:
**PCT/EP2013/062098**

(22) Anmeldetag: **12.06.2013**

(87) Internationale Veröffentlichungsnummer:
**WO 2014/012716 (23.01.2014 Gazette 2014/04)**

(54) **VISUALISIERUNG VON HINWEISEN BEI DER INDUKTIONSTHERMOGRAFIE**

VISUALIZATION OF REFERENCES DURING INDUCTION THERMOGRAPHY

VISUALISATION D'INDICATIONS LORS DE LA THERMOGRAPHIE PAR INDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2012 DE 102012212434**

(43) Veröffentlichungstag der Anmeldung:
**17.12.2014 Patentblatt 2014/51**

(73) Patentinhaber: **Siemens Aktiengesellschaft 80333 München (DE)**

(72) Erfinder:
• **BIENKOWSKI, Lukasz Adam**
**81739 München (DE)**
• **HOMMA, Christian**
**85551 Kirchheim b. München (DE)**
• **ROTHENFUSSER, Max**
**81377 München (DE)**

(56) Entgegenhaltungen:
**WO-A1-2011/098162    WO-A1-2013/072194**

• **L Bienkowski ET AL: "Hybrid Camera and Real-View Thermography for Nondestructive Evaluation", 11th International Conference on Quantitative InfraRed Thermography, 11-14 June 2012, Naples Italy, 14. Juni 2012 (2012-06-14), XP055077393, Gefunden im Internet: URL:http://www.ndt.net/article/qirt2012/papers/QIRT-2012-254.pdf [gefunden am 2013-09-02]**
• **BEN WEEKES ET AL: "Eddy-current induced thermography probability of detection study of small fatigue cracks in steel, titanium and nickel-based superalloy", NDT & E INTERNATIONAL, BUTTERWORTH-HEINEMANN, OXFORD, GB, Bd. 49, 29. März 2012 (2012-03-29), Seiten 47-56, XP028502608, ISSN: 0963-8695, DOI: 10.1016/J.NDTEINT.2012.03.009 [gefunden am 2012-03-29]**
• **Lukas Bienkowski ET AL: "Real View Thermography", DACH-Jahrestagung 2012 in Graz - Mi.3.C.3, 17.-19.September 2012, 19. September 2012 (2012-09-19), XP055077397, Gefunden im Internet: URL:http://www.ndt.net/article/dgzfp2012/papers/mi3c3.pdf [gefunden am 2013-09-02]**
• **Thomas Schilling: "Augmented Reality in der Produktentstehung", , 7. Juli 2008 (2008-07-07), XP055077390, Gefunden im Internet: URL:http://www.db-thueringen.de/servlets/DerivateServlet/Derivate-16751/ilm1-2008000 157.pdf [gefunden am 2013-09-02]**

EP 2 812 656 B1

**Beschreibung**

Die Erfindung betrifft ein Verfahren und eine Vorrichtung zur Induktionsthermografie zur zerstörungsfreien Materialuntersuchung.

Während einer Untersuchung mittels Induktionsthermografie wird ein Prüfkopf, der ebenso als Induktor bezeichnet wird, über einem Prüfling beziehungsweise über ein Prüfteil positioniert. Das aus dem in dem Prüfkopf fließenden Strom resultierende Magnetfeld erzeugt in dem zu untersuchenden Prüfteil einen elektrischen Induktionsstrom. Dieser führt durch Ohmsche Verluste zu einer Erwärmung des Prüfteils. Die in dem Prüfteil resultierende Wärmeverteilung kann wiederum mittels einer Infrarotkamera detektiert werden. Enthält das Prüfteil Defekte, wie es beispielsweise Risse sind, muss der induzierte Strom um diese herum oder über die vorhandenen Berührstellen fließen. Dieser Vorgang führt dazu, dass eine lokale Stromdichte und daraus folgend eine Erwärmung an diesen Stellen erhöht wird. Im Infrarotbild sind damit Risse erkennbar.

L. Bienkowski ET AL: "Hybrid Camera and Real-View Thermography for Nondestuturve Evaluation"; 11th International Conference on Quantitative InfraRed Thermography, 11-14 June 2012, Naples Italy, offenbart zwei neue Ansätze zur Verbesserung der aktiven Thermographie für nichtzerstörerisches Testen, und zwar wird ein Hybrid-Kamera-Aufbau verwendet, um Infrarotbilder mit zusätzlichen Farbbildern zur Bereitstellung von zusätzlichen Informationen auf dem Bildschirm überlagert., Um die Bewertung der Daten intuitiver zu machen, wird ein Echt-Ansicht-Aufbau präsentiert mit einer Projektion von Messergebnissen direkt auf das Teil in einer sehr intuitiven Art.

Die WO 2011/098162 A1 offenbart eine Anordnung für die Bewertung eines Prüfobjektes mittels aktiver Thermographie mit mindestens einer Energiequelle zur mindest partiellen Erwärmung des Prüfobjektes, einer ersten Kamera zur Aufnahme mindestens eines Thermographie-Prüfbildes des zumindest partiell erwärmten Prüfobjektes, eine Mess- und Projektionseinheit mit einer zweiten Kamera zur Ermittlung von dreidimensionalen Oberflächenkoordinaten des Prüfobjektes mittels Abstandsmessung, ein Projektor zur deckungsgleichen Projektion des auf der Basis der dreidimensionalen Oberflächendaten des Prüfobjektes angepassten Thermographie-Prüfbildes auf das Prüfobjekt, sowie eine entsprechendes Verfahren.

WEEKES BEN ET. AL.; "Eddy-current induced thermography - probability of detection study of small fatigue cracks in steel, titanium and nickel-based superalloy"; NDT&E International, Butterworth-Heinemann, Oxford; Vol. 49; pp. 47 - 56; XP028502608 offenbart eine "Eddy"-Strom-induzierte Thermographie als ein actives Thermographieverfahren mit der Fähigkeit, schnellen und nicht berührenden Erfassens von au seiner Ebene herausragenden Rissen in elektrisch leitenden Teilen.

Es ist Aufgabe der vorliegenden Erfindung ein Verfahren und eine Vorrichtung der Induktionsthermografie eines Prüfteils anzugeben, mit denen Materialfehler bei nicht automatisierten Messvorgängen mit einer maximalen Fehlerauffindwahrscheinlichkeit erfasst werden. Es sollen alle Materialfehler bestimmter Art, ab einer definierten und bestimmten Größe, im gesamten Prüfteil beziehungsweise in einem bestimmten Bereich des Prüfteils reproduzierbar gefunden werden können.

Es soll gewährleistet sein, dass die Fehlerauffindwahrscheinlichkeit maximiert wird. Es sollen mittels einer Untersuchung eines Prüfteils, alle Defekte bestimmter Art, wie es beispielsweise Risse sind, ab einer Fehlerauffindwahrscheinlichkeit ist hier als Wahrscheinlichkeitskurve dargestellte Aussage definiert, mit der Wahrscheinlichkeiten der Materialfehlererfassung in Abhängigkeit von der Größe des Materialfehlers und allen relevanten Messparametern beschrieben werden. Die Messparameter können bekannt und/oder direkt oder indirekt eingestellt werden. Messparameter sind insbesondere der Abstand zwischen Induktor und Prüfteil, Größe des Induktionsbereichs im Prüfteil und Richtung des Induktionsstromflusses.

Es werden so genannte Fehlerauffindwahrscheinlichkeitskurven (Propability of Detection/POD-Kurven) verwendet, die in Abhängigkeit von der Defektgröße und mit Berücksichtigung aller bedeutenden Messparameter, die Wahrscheinlichkeit der Detektion darstellen. Die Messparameter sind entweder bekannt oder können direkt beziehungsweise indirekt beeinflusst werden. Es kann also eine Aussage getroffen werden, welche minimale Größe ein Defekt aufweisen muss, um mit hinreichender Genauigkeit detektiert zu werden. Diese Aussage ist aber lediglich dann richtig, wenn alle Einschränkungen einer Messung berücksichtigt werden. Wird beispielsweise der Induktor zu weit entfernt von dem Prüfteil durch die Prüfperson gehalten, verändern sich die Messparameter und die Aussage verliert Ihre Gültigkeit.

Die Aufgabe wird durch ein Verfahren gemäß dem Hauptanspruch und eine Vorrichtung gemäß dem Nebenanspruch gelöst.

Gemäß einem ersten Aspekt wird ein Verfahren der scannenden Induktionsthermografie zur zerstörungsfreien Materialuntersuchung eines Prüfteils vorgeschlagen, wobei während einer manuellen Messung durch eine Prüfperson ein Relativpositionieren des Prüfteils und eines eine Infrarotbilder aufzeichnende Infrarotkamera aufweisenden und einen elektrischen Induktionsstrom im Prüfteil erzeugenden Induktors zueinander ausgeführt wird. Es erfolgen eine mittels einer Rechnereinrichtung ausgeführte Auswertung mindestens eines der aufgezeichneten Infrarotbilder und ein mittels einer Projektoreinrichtung auf die Oberfläche des Prüfteils erfolgendes Projizieren jeweils eines einem Ergebnis der Auswertung entsprechenden Hinweises für die Prüfperson.

Gemäß einem zweiten Aspekt wird eine Vorrichtung zur scannenden Induktionsthermografie zur zerstörungsfreien Materialuntersuchung eines Prüfteils vorgeschlagen, wobei während einer manuellen Messung durch eine Prüfperson das Prüfteil und ein eine Infrarotbilder aufzeichnende Infrarotkamera aufweisenden und einen elektrischen Induktionsstrom im Prüfteil erzeugender Induktor zueinander relativ positioniert werden, wobei eine mittels einer Rechnereinrichtung ausgeführte Auswertung mindestens eines der aufgezeichneten Infrarotbilder und ein mittels einer Projektoreinrichtung auf die Oberfläche des Prüfteils erfolgendes Projizieren jeweils eines einem Ergebnis der Auswertung entsprechenden Hinweises für die Prüfperson ausgeführt werden.

Es wird also ein System vorgeschlagen, das die Prüfperson während oder nach einer Messung unterstützt, indem wichtige Hinweise direkt auf das Prüfteil projiziert werden. Ziel ist es, der Prüfperson während oder direkt nach der Messung ein Feedback in Form einer Projektion auf das Prüfteil zu geben, das der Prüfperson einen Hinweis darauf gibt, ob die Messung hinsichtlich insbesondere der Fehlerauffindwahrscheinlichkeit, korrekt durchgeführt wird oder wurde. Es ist erkannt worden, dass das Messergebnis einer manuellen nicht automatisierten Induktionsthermografie hinsichtlich der Materialfehlererfassung und ebenso hinsichtlich der Fehlerauffindwahrscheinlichkeit sehr stark von der Prüfperson abhängt (sogenannter menschlicher Aspekt). Erfindungsgemäß werden Informationen aus Infrarotbildern zur Bewertung von Materialfehlern und Abschätzung der Fehlerauffindwahrscheinlichkeit verwendet, um die Prüfperson während oder nach der Messung zu unterstützen und den Einfluss des sogenannten menschlichen Aspektes so weit wie möglich zu verringern.

Weitere vorteilhafte Ausgestaltungen werden in Verbindung mit den Unteransprüchen beansprucht.

Gemäß einer vorteilhaften Ausgestaltung kann ein Hinweis während oder nach der Messung anzeigen, ob die Messung hinsichtlich einer geforderten Fehlerauffindwahrscheinlichkeit unter Berücksichtigung von Messparametern korrekt ausgeführt wird oder wurde. Es ist erkannt worden, dass folgender Effekt die Fehlerauffindwahrscheinlichkeit beeinflussen kann, und zwar der Abstand zwischen dem Induktor und dem Prüfteil. Ein weiterer Messparameter ergibt sich daraus, dass der induzierte Strom bevorzugt in der Nähe des Induktors beziehungsweise des Prüfkopfes fließt, sodass Fehler lediglich in einem bestimmten Bereich um den Induktor herum detektiert werden können. Dieser Bereich kann als Messbereich bezeichnet werden. Sollte das gesamte Prüfteil beziehungsweise ein größerer Bereich untersucht werden, muss die Messung mehrmals mit entsprechender Verschiebung des Prüfkopfes wiederholt werden. Eine weitere wichtige Erkenntnis ist, dass aufgrund der Richtung des Stromflusses am besten solche Defekte detektiert werden können, die senkrecht zum Stromfluss beziehungsweise zum Induktor liegen. Erfindungsgemäß ist erkannt worden, dass diese Messparameter bei nicht automatisierten Messvorgängen zu Einschränkungen führen können, sodass die Messung fehlerhaft wird und die Fehlerauffindwahrscheinlichkeit zu gering ist. Mittels der Projektion der jeweiligen Fehlerauffindwahrscheinlichkeit an die Prüfperson kann die Fehlerauffindwahrscheinlichkeit bei der Messung über das gesamte Prüfteil beziehungsweise mehrere Prüfteile konstant gehalten werden. Dies ist ein großer Vorteil bei Messungen, bei denen eine Automatisierung entweder nicht möglich oder nicht rentabel wäre.

Gemäß einer weiteren vorteilhaften Ausgestaltung kann die Rechnereinrichtung mittels von der zu erfassenden Größe eines Materialfehlers abhängigen Fehlerauffindwahrscheinlichkeitskurven unter Berücksichtigung der Messparameter, das heißt die Eigenschaften unter denen die Messung erfolgt, die maximale mögliche Fehlerauffindwahrscheinlichkeit der Messung bestimmen.

Gemäß einer weiteren vorteilhaften Ausgestaltung kann die Rechnereinrichtung die Auswertung mindestens eines der aufgezeichneten Infrarotbilder zur Berechnung der Messparameter der Messung ausführen.

Gemäß einer weiteren vorteilhaften Ausgestaltung kann zur Berechnung von Messparametern die Auswertung des Infrarotbildes des Prüfteils ohne Induktor ausgeführt werden.

Gemäß einer weiteren vorteilhaften Ausgestaltung kann zur Berechnung von Messparametern die Auswertung eines vor der Induktion des Induktionsstromes aufgenommenen Infrarotbildes des positionierten Induktors und des Prüfteils ausgeführt werden.

Gemäß einer weiteren vorteilhaften Ausgestaltung kann zur Berechnung von Messparametern die Auswertung eines mittels Puls-Phasen-Analyse der während der Messung aufgenommenen Infrarotbilder erzeugten Amplitudenbildes ausgeführt werden.

Gemäß einer weiteren vorteilhaften Ausgestaltung kann zur Berechnung von Messparametern die Auswertung eines mittels Puls-Phasen-Analyse der während der Messung aufgenommen Infrarotbilder erzeugten Phasenbildes ausgeführt werden.

Gemäß einer weiteren vorteilhaften Ausgestaltung können die Messparameter der Abstand zwischen Induktor und Prüfteil, der Messbereich des Induktors und/oder die Orientierung des Induktors gegenüber dem Prüfteil sein.

Gemäß einer weiteren vorteilhaften Ausgestaltung kann als ein Hinweis während oder nach der Messung senkrecht zur Orientierung des Induktors verlaufende Linien auf das Prüfteil projiziert werden zur Anzeige, dass entlang der Linien sich erstreckende Materialfehler mit einer maximalen möglichen Fehlerauffindwahrscheinlichkeit erfasst werden oder wurden.

Gemäß einer weiteren vorteilhaften Ausgestaltung können als ein Hinweis während oder nach der Messung farbkodierte Flächen auf das Prüfteil projiziert werden, zur Anzeige, dass in den jeweiligen Farbflächen sich in bestimmte Richtungen sich erstreckende Materialfehler mit einer maximalen Fehlerauffindwahrscheinlichkeit werden oder wurden.

Gemäß einer weiteren vorteilhaften Ausgestaltung kann nach der Messung die Orientierung des Induktors verändert und eine weitere Messung ausgeführt werden, wobei zusätzlich weitere senkrecht zur veränderten Orientierung des Induktors verlaufende Linien und weitere Farbcodierte Flächen auf das Prüfteil projiziert werden können.

Gemäß einer weiteren vorteilhaften Ausgestaltung kann ein Hinweis während oder nach der Messung angezeigt werden, ob bei Bekanntsein der Geometrie des Induktors dessen Lage gegenüber dem Prüfteil und aller Messparameter, die Messparameter der Messung korrekt eingestellt sind oder waren.

Gemäß einer weiteren vorteilhaften Ausgestaltung kann ein Hinweis den Messbereich des Induktors in Abhängigkeit von dessen Relativposition zum Prüfteil als farbige Fläche auf dem Prüfteil anzeigen.

Gemäß einer weiteren vorteilhaften Ausgestaltung kann ein Hinweis während oder nach der Messung die Korrektheit des Abstandes zwischen Induktor und Prüfteil mittels einer bestimmten Farbe der farbigen Fläche anzeigen.

Gemäß einer weiteren vorteilhaften Ausgestaltung können gleiche Messbereiche von Messungen mit unterschiedlichen Orientierungen des Induktors überlappend angezeigt werden.

Gemäß einer weiteren vorteilhaften Ausgestaltung kann ein Hinweis eine Information zur Qualität der Positionierung des Induktors anzeigen.

Die Erfindung wird anhand von Ausführungsbeispielen in Verbindung mit den Figuren näher beschrieben. Es zeigen:

Figur 1 ein erstes Ausführungsbeispiel eines erfindungsgemäßen Hinweises;

Figur 2 ein zweites Ausführungsbeispiel eines erfindungsgemäßen Hinweises;

Figur 3 ein drittes Ausführungsbeispiel eines erfindungemäßen Hinweises;

Figur 4 ein viertes Ausführungsbeispiel eines erfindungsgemäßen Hinweises;

Figur 5 ein Ausführungsbeispiel einer weiteren Messung;

Figur 6 ein fünftes Ausführungsbeispiel eines erfindungsgemäßen Hinweises;

Figur 7 ein sechstes Ausführungsbeispiel eines erfindungsgemäßen Hinweises.

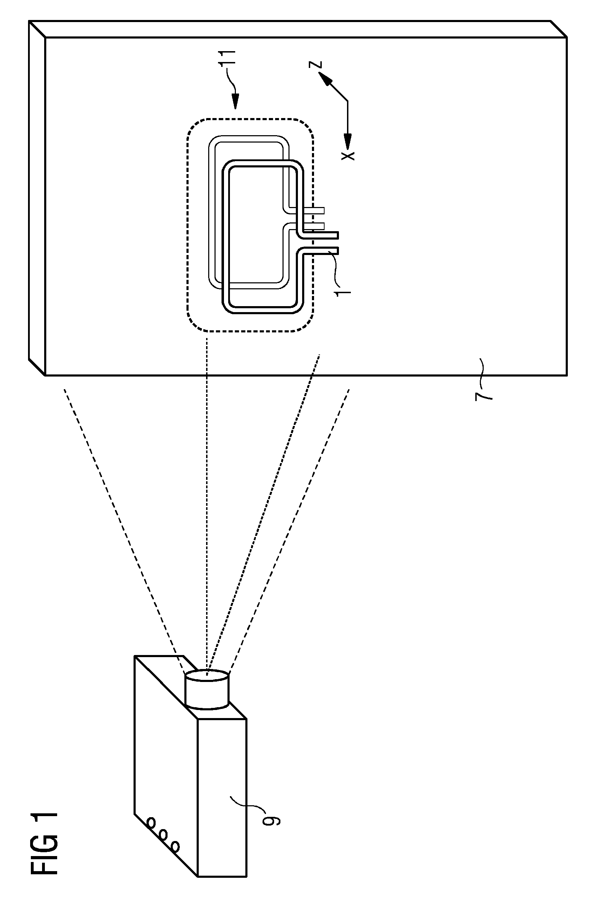

Figur 1 zeigt ein erstes Ausführungsbeispiel eines erfindungsgemäßen Hinweises. Figur 1 zeigt eine Projektoreinrichtung 9, die auf die Oberfläche eines Prüfteils 7 einen sich aus einer Auswertung ergebenden Hinweis 11 für die Prüfperson auf die Oberfläche des Prüfteils 7 projiziert. Zusätzlich ist ein Induktor 1 in Relativposition zum Prüfteil 7 dargestellt. Der Hinweis 11 gemäß Figur 1 ist ein rotes Feld das unterhalb des Induktors 1 auf das Prüfteil 7 projiziert wurde. Die Farbe rot zeigt der Prüfperson an, dass der Induktor 1 relativ zum Prüfteil 7 noch nicht korrekt positioniert ist. Der Hinweis 11 umfasst zusätzlich zwei Pfeile, und zwar einen in x-Richtung und einen in z-Richtung, die der Prüfperson anzeigen, wie der Induktor 1 relativ zum Prüfteil 7 zur Erreichung einer korrekten Relativposition bewegt werden muss. Vor einer eigentlichen Messung muss eine Entscheidung darüber getroffen werden, in welchem Bereich des Prüfteils 7 die Messung durchgeführt werden soll. Da die Geometrie des Induktors 1 sowie dessen Lage gegenüber dem Prüfteil 7 und alle Messparameter bekannt sind, kann der Bereich um den Induktor 1, in dem der Induktionseffekt zustande kommt, in Abhängigkeit von der Lage des Induktors 1 zum Prüfteil 7 bestimmt werden. Die Lage des Induktors 1 gegenüber dem Prüfling 7 kann beispielsweise mithilfe von einem an dem Induktor 1 angebrachten Lagesensor bestimmt werden.

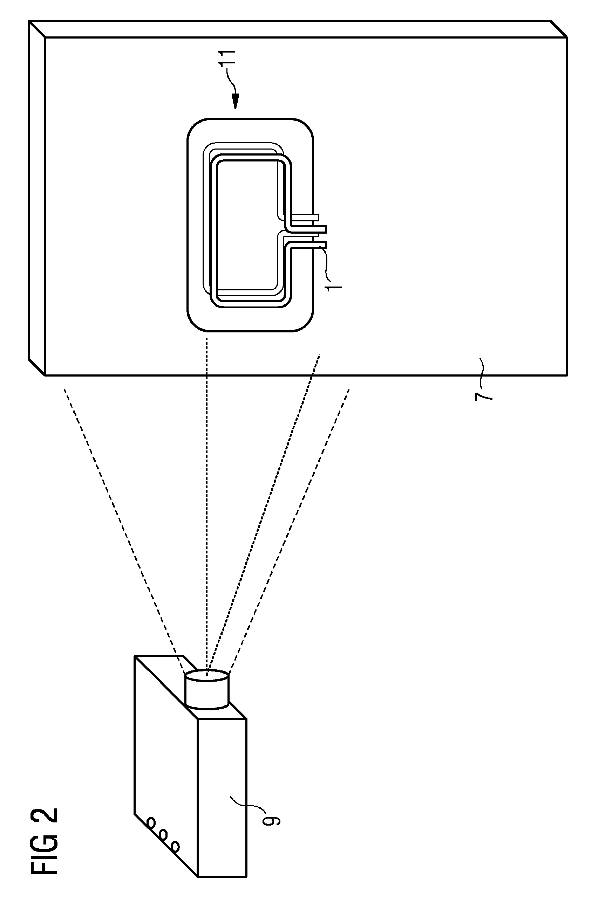

Figur 2 zeigt ein zweites Ausführungsbeispiel eines erfindungsgemäßen Hinweises. Im Vergleich zu Figur 1 ist der Induktor 1 relativ zum Prüfteil 7 durch die Prüfperson entsprechend den Pfeilvorgaben in x-Richtung und z-Richtung relativ zum Prüfteil 7 bewegt worden. Das farbige Feld unterhalb des Induktors 1 weist nun die Farbe Grün auf. Damit erfolgt ein Hinweis 11 gemäß diesem zweiten Ausführungsbeispiel. Figur 2 zeigt beispielsweise einen Messbereich, in dem der Induktionseffekt zustande kommt. Dieser bestimmte Bereich wird vor der Messung auf das Prüfteil 7 als eine grüne Fläche projiziert, da nun der Abstand zwischen dem Induktor 1 und dem Prüfteil 7 korrekt ist. Die Messposition des Induktors 1 relativ zum Prüfteil 7 ist erreicht. Die Messung kann beginnen.

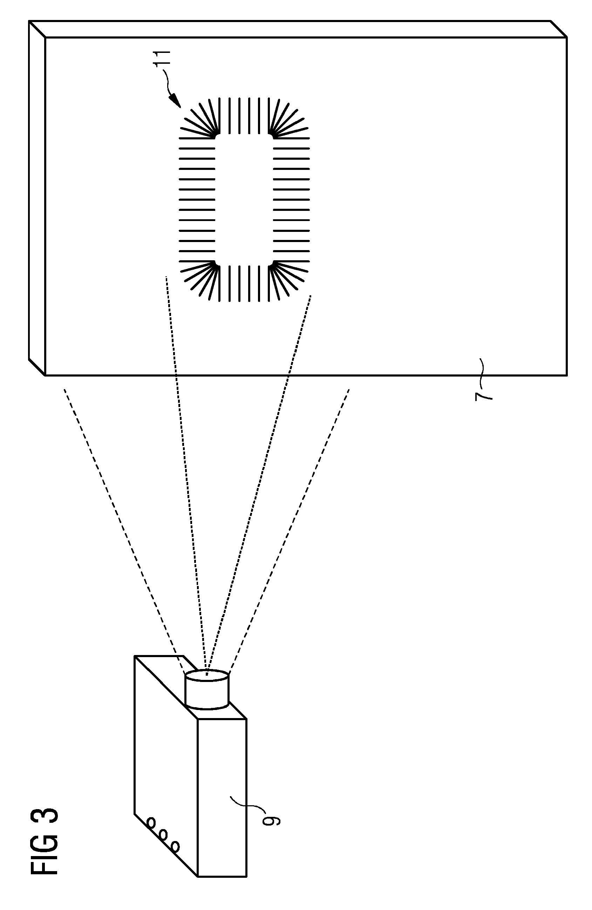

Figur 3 zeigt ein drittes Ausführungsbeispiel eines erfindungsgemäßen Hinweises 11. Zur Erstellung eines Hinweises 11 können vorteilhaft folgende vier Bilder verwendet werden. Ein Bild des Prüfteils 7 ohne Induktor 1, wobei dieses Bild mit "O" bezeichnet wird. Ein weiteres Bild des positionierten Induktors 1 und des Prüfteils 7 vor dem Einschalten des Stromes, wobei dieses Bild mit "I" bezeichnet wird. Nach der Messung wird die aufgenommene Infrarotbildserie einer Puls-Phasen-Analyse unterzogen, die in der Thermografie einen bekannten Algorithmus darstellt. Daraus ergeben sich ein Amplitudenbild "A" und ein Phasenbild "P". Aus diesen lassen sich die folgenden Informationen bestimmen:

1. Die x,y-Position des Induktors 1 unter Verwendung der Bilder "O" und "I" mit einer Differenzbildung $Ix'=(1-O)$.

2. Bereich, der vom Induktor 1 verdeckt wurde, unter Verwendung der Bilder "O" und "I" unter Verwendung des Algorithmus $I'' = \begin{cases} 1 \ wenn \ I' > 0 \\ 0 \ wenn \ I' \leq 0 \end{cases}$

3. Bereich, in dem der Induktionseffekt eine ausreichende Stärke hatte, wobei ebenso schief oder in falschem Abstand gehaltene Induktoren 1 berücksichtigt sind, unter Verwendung des Bildes "A" mittels des Algorithmus

1. Maskierung des Induktors $Ax' = A * I'$;
2. Umrechnung des Amplitudenbildes $Ax'$ in ein Temperaturdifferenzbild $T$;
3. Umwandlung in eine farbkodierte Darstellung der Fehlerauffindwahrscheinlichkeit $F$ beziehungsweise des Kontrasts/Signal-Rausch-Verhältnisses.

4. Orientierungssensitivität, unter Verwendung der Bilder "A" und "P", mittels

1. Extraktion der Linien gleicher Richtung des Stromflusses, den sogenannten "Höhenlinien";

2. Berechnung der Senkrechten dieser Höhenlinien, wobei diese Linien der optimalen Defektorientierung entsprechen, das heißt der Ausrichtung, in der Risse am besten erkannt werden können. Wird beispielsweise als Induktor 1 eine runde Leiterschleife verwendet, ist die Orientierungssensitivität ein Strahlenkranz um den Induktor 1.

5. z-Position des Induktors 1, und zwar der Abstand Induktor 1 - Prüfteil 7, unter Verwendung des Bildes "A" mittels Vergleichen des Amplitudenverlaufs in der Nähe des Induktors 1 mit analytisch berechneten Lösungen.

Anschließend kann beurteilt werden, ob die Fehlerauffindwahrscheinlichkeit in dem untersuchten Bereich mit der Forderung übereinstimmt und diese Information auf das Prüfteil 7 projiziert wird. Dabei ist zu berücksichtigen, dass die Detektierbarkeit, und die Fehlerauffindwahrscheinlichkeit stark von der Orientierung des Prüfkopfes beziehungsweise des Induktors 1 gegenüber potentiellen Defekten abhängt. Dies muss in der Projektion zum Ausdruck gebracht werden. Gemäß Figur 3 werden auf den untersuchten Bereich Linien projiziert, deren Orientierung senkrecht zu dem Induktor 1 platziert sind. Diese Informationen sind gemäß obigen Punkt Nr. 4 hinsichtlich des Merkmals Orientierungssensitivität ermittelt worden. Für derartig liegende Defekte ist die Fehlerauffindwahrscheinlichkeit am größten. Dies stellt der Hinweis 11 gemäß Figur 3 dar. Es wurde ein Induktor 1 verwendet, der in Form einer runden Leiterschleife ausgebildet ist, sodass die Orientierungssensitivität ein Strahlenkranz um den Induktor 1 herum ist. Es werden nach der Messung auf den untersuchten Bereich je nach Einstellung grüne, senkrecht zum Induktor 1 orientierte Linien projiziert. Mittels der Darstellung kann auf die Orientierung der Defekte sowie den Bereich, in dem diese detektierbar sind geschlossen werden.

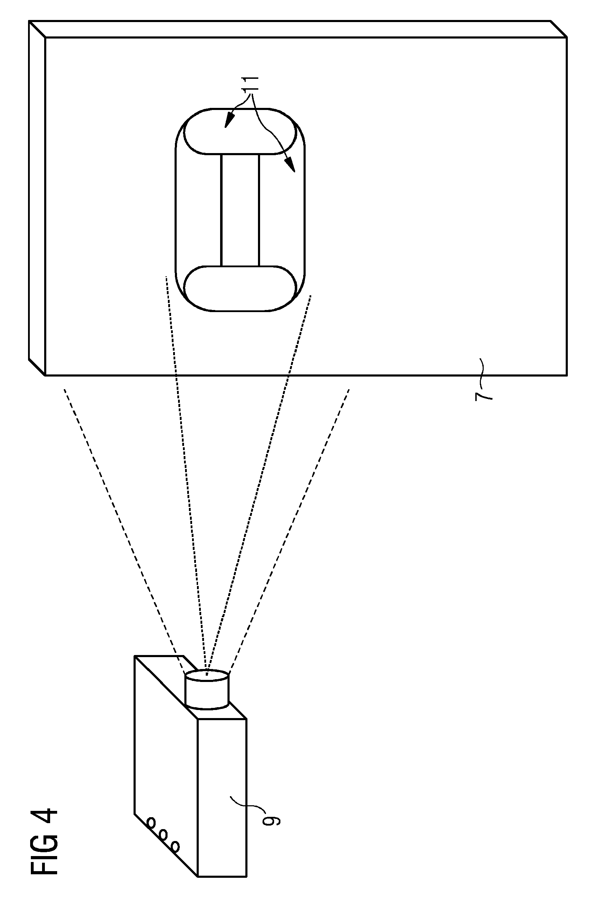

Figur 4 zeigt ein viertes Ausführungsbeispiel eines erfindungsgemäßen Hinweises 11. Dabei entspricht die Darstellung gemäß Figur 4 der Figur 3 jedoch mit dem Unterschied, dass nach der Messung auf den untersuchten Bereich je nach Einstellung farbcodierte Flächen projiziert werden. Auch mit einer derartigen Darstellung gemäß Figur 4 kann auf die Orientierung von Defekten sowie den Bereich, in dem diese detektierbar sind geschlossen werden.

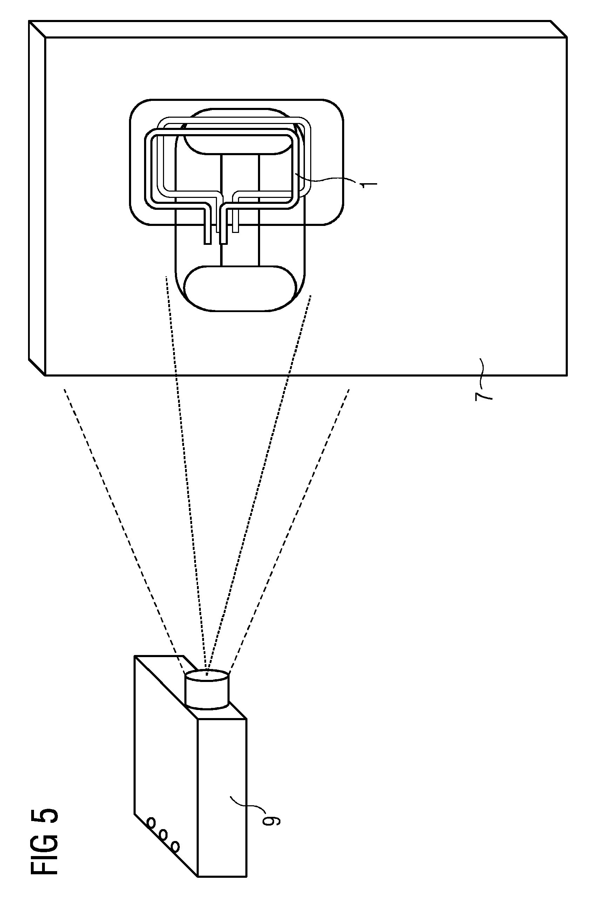

Figur 5 zeigt, wie die Prüfperson den Induktor 1 innerhalb des Bereichs gleicher Geometrie bewegt und die Projektion mitbewegt wird Auf diese Weise kann eine gute Einschätzung erfolgen, welcher Bereich des Prüfteils 7 untersucht wird. Gemäß Figur 5 wird der Induktor 1 von der Prüfperson mit einer aktivierten Positionierungshilfe um 90 Grad gedreht und derart positioniert, dass sich die grüne Fläche der Positionierungshilfe teilweise mit den Ergebnissen der ersten Messung überschneiden. So kann gewährleistet werden, dass die Fehlerauffindwahrscheinlichkeit an den Überschneidungsbereichen steigt, da Defekte unabhängig von deren Orientierung sichtbar gemacht werden können.

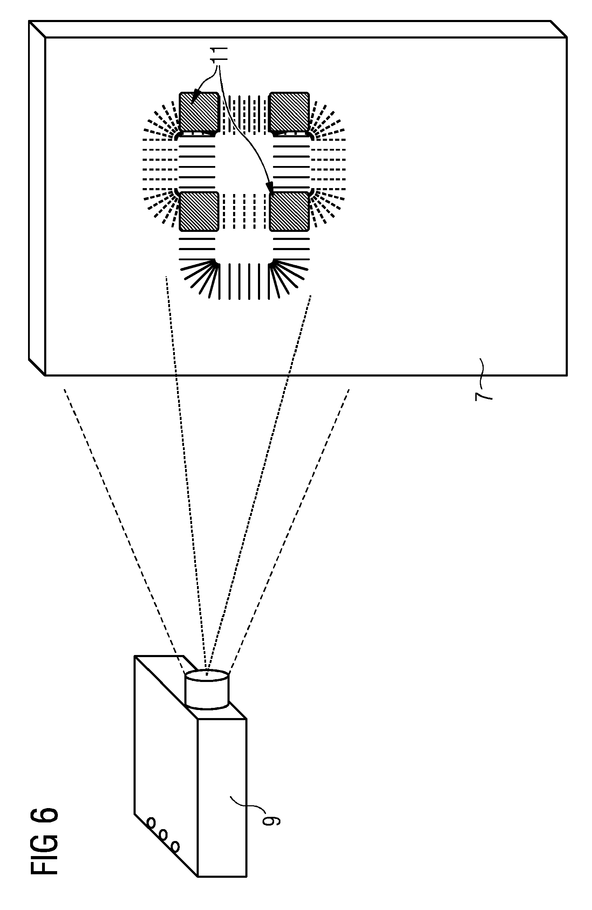

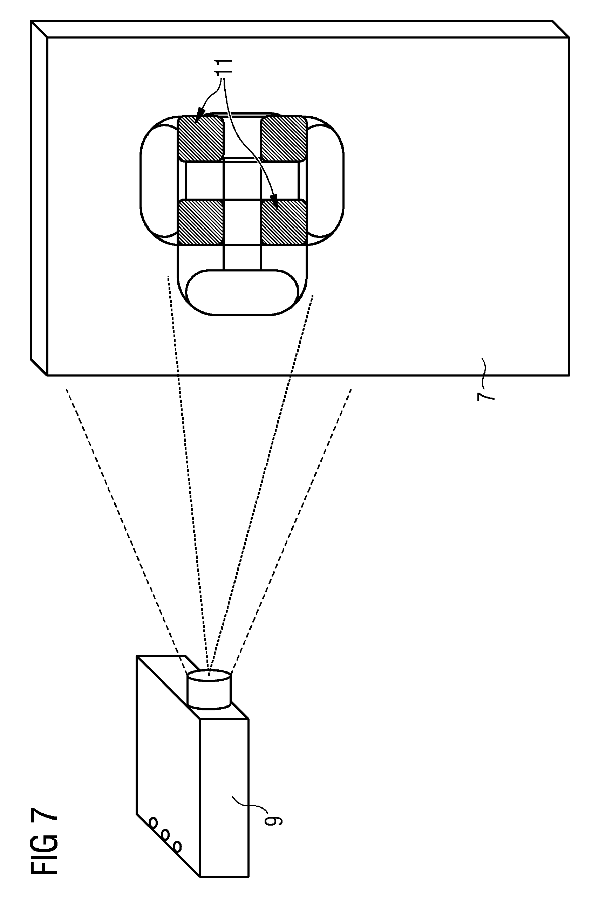

Figuren 6 und 7 zeigen weitere Ausführungsbeispiele erfindungsgemäßer Hinweise 11 für den Fall einer Messung und einer sich daran anschließenden weiteren Messung. Überschneidungsbereiche beider Messungen sind in der Projektion grün gekennzeichnet, und zwar sowohl in der Linieneinstellung als auch in der Flächeneinstellung. Anschließend können weitere Bereiche des Prüflings ausgewählt und geprüft werden. Darüber hinaus kann der Prüfperson zum ermöglichen einer konsistenten Serienprüfung von Prüfteilen 7 eine Information zur Qualität der Positionierung des Induktors 1 beziehungsweise eine Qualität der Relativpositionierung projiziert werden. Auf diese Weise kann die Prüfperson den Induktor 1 beispielsweise so lange bewegen, bis eine einheitliche gespeicherte Optimalposition erreicht wird. Auf diese Weise wird gewährleistet, dass bei jedem Prüfteil 7 der Serie der Induktor 1 an einer gleichen Relativposition positioniert ist.

Für alle weiteren Messungen werden Informationen kumulativ dargestellt. Ändert die Prüfperson die Orientierung des Induktors 1 bei weiteren Messungen beispielsweise um 90 Grad, werden für alle Messungen die Linien projiziert. Sie geben einen Hinweis darauf, welche Rissrichtungen von bereits durchgeführten Messungen mit der angenommenen Fehlerauffindwahrscheinlichkeit abgedeckt wurden. Für weitere Messungen können alternativ oder kumulativ neue Bereiche des Prüfteils 7 mit dem Induktor 1 abgedeckt werden. Informationen und Hinweise 11 können beispielsweise als Zahlen, Buchstaben, Farbfelder, Linien oder beliebige Symbole auf das Objekt projiziert sein.

Die Erfindung schlägt ein Verfahren und eine Vorrichtung zur scannenden Induktionsthermografie zur zerstörungsfreien Materialuntersuchung eines Prüfteils 7 vor, mit denen die Qualität einer manuellen Messung durch eine Prüfperson wirksam verbessert werden kann. Dazu werden eine Auswertung von aufgezeichneten Infrarotbildern und das Projizieren von der Auswertung entsprechenden Hinweisen 11 auf das Prüfteil 7 für die Prüfperson ausgeführt.

**Patentansprüche**

1. Verfahren der scannenden Induktionsthermografie zur zerstörungsfreien Materialuntersuchung eines Prüfteils (7), mittels während einer manuellen Messung durch eine Prüfperson ausgeführtes Relativpositionieren des Prüfteils (7) und eines eine Infrarotbilder aufzeichnende Infrarotkamera (5) aufweisenden und einen elektrischen Induktionsstrom im Prüfteil (7) erzeugenden Induktors (1) zueinander, wobei eine mittels einer Rechnereinrichtung ausgeführte Auswertung mindestens eines der aufgezeichneten Infrarotbilder und ein mittels einer Projektoreinrichtung (9) auf die Oberfläche des Prüfteils (7) erfolgendes Projizieren jeweils eines einem Ergebnis der Auswertung entsprechenden Hinweises (11) für die Prüfperson ausgeführt werden, **dadurch gekennzeichnet, dass** ein Hinweis während oder nach der Messung anzeigt, ob die Messung hinsichtlich einer geforderten Fehlerauffindwahrscheinlichkeit unter Berücksichtigung von Messparametern korrekt ausgeführt wird oder wurde.

2. Verfahren nach Anspruch 1, **dadurch gekennzeichnet, dass** die Rechnereinrichtung mittels von der zu erfassenden Größe eines Materialfehlers abhängigen Fehlerauffindwahrscheinlichkeitskurven unter Berücksichtigung der Messparameter die Fehlerauffindwahrscheinlichkeit der Messung bestimmt.

3. Verfahren nach Anspruch 1 oder 2, **dadurch gekennzeichnet, dass** die Rechnereinrichtung die Auswertung mindestens eines der aufgezeichneten Infrarotbilder zur Berechnung der Messparameter der Messung ausführt.

4. Verfahren nach Anspruch 3, **dadurch gekennzeichnet, dass** zur Berechnung von Messparametern die Auswertung eines Infrarotbildes (0) des Prüfteils (7) ohne Induktor ausgeführt wird.

5. Verfahren nach Anspruch 3 oder 4, **dadurch gekennzeichnet, dass** zur Berechnung von Messparametern die Auswertung eines vor der Induktion des Induktionsstroms aufgenommenen Infrarotbildes (I) des positionierten Induktors und des Prüfteils (7) ausgeführt wird.

6. Verfahren nach Anspruch 3, 4 oder 5, **dadurch gekennzeichnet, dass** zur Berechnung von Messparametern die Auswertung eines mittels Puls-Phasen-Analyse der während der Messung aufgenommenen Infrarotbilder erzeugten Amplitudenbildes (A) ausgeführt wird.

7. Verfahren nach Anspruch 3, 4, 5 oder 6, **dadurch gekennzeichnet, dass** zur Berechnung von Messparametern die Auswertung eines mittels Puls-Phasen-Analyse der während der Messung aufgenommenen Infrarotbilder erzeugten Phasenbildes (P) ausgeführt wird.

8. Verfahren nach einem der vorangehenden Ansprüche 1 bis 7, **dadurch gekennzeichnet, dass** Messparameter der Abstand zwischen Induktor und Prüfteil, der Messbereich des Induktors und/oder die Orientierung des Induktors gegenüber dem Prüfteil sind/ist.

9. Verfahren nach Anspruch 8, **dadurch gekennzeichnet, dass** als ein Hinweis während oder nach der Messung senkrecht zur Orientierung des Induktors verlaufende Linien auf das Prüfteil projiziert werden zur Anzeige, dass entlang der Linien sich erstreckende Materialfehler mit einer maximalen Fehlerauffindwahrscheinlichkeit erfasst werden oder wurden.

10. Verfahren nach Anspruch 8, **dadurch gekennzeichnet, dass** als ein Hinweis während oder nach der Messung farbkodierte Flächen auf das Prüfteil projiziert werden zur Anzeige, dass in den jeweiligen Farbflächen sich in bestimmte Richtungen sich erstreckende Materialfehler mit einer maximalen Fehlerauffindwahrscheinlichkeit erfasst werden oder wurden.

11. Verfahren nach Anspruch 9 oder 10, **dadurch gekennzeichnet, dass** nach der Messung die Orientierung des Induktors verändert und eine weitere Messung ausgeführt wird, wobei zusätzlich weitere senkrecht zur veränderten Orientierung des Induktors verlaufende Linien oder weitere farbkodierte Flächen auf das Prüfteil projiziert werden.

12. Verfahren nach einem der vorangehenden Ansprüche, **dadurch gekennzeichnet, dass** ein Hinweis während oder nach der Messung anzeigt, ob bei Bekanntsein der Geometrie des Induktors, dessen Lage gegenüber dem Prüfteil und aller Messparameter die Messparameter der Messung korrekt eingestellt sind oder waren.

13. Verfahren nach Anspruch 12, **dadurch gekennzeichnet, dass** ein Hinweis den Messbereich des Induktors in Abhängigkeit von dessen Relativposition zum Prüfteil als farbige Fläche auf dem Prüfteil anzeigt.

14. Verfahren nach Anspruch 12 oder 13, **dadurch gekennzeichnet, dass** ein Hinweis während oder nach der Messung die Korrektheit des Abstandes zwischen Induktor und Prüfteil mittels einer bestimmten Farbe der farbigen Fläche anzeigt.

15. Verfahren nach Anspruch 13, **dadurch gekennzeichnet, dass** gleiche Messbereiche von Messungen mit unterschiedlichen Orientierungen des Induktors überlappend angezeigt werden.

16. Verfahren nach einem der vorangehenden Ansprüche, **dadurch gekennzeichnet, dass** ein Hinweis eine Information zur Qualität der Positionierung des Induktors anzeigt.

17. Vorrichtung zur scannenden Induktionsthermografie zur zerstörungsfreien Materialuntersuchung eines Prüfteils (7), mittels während einer manuellen Messung durch eine Prüfperson ausgeführtes Relativpositionieren des Prüfteils (7) und eines eine Infrarotbilder aufzeichnende Infrarotkamera (5) aufweisenden und einen elektrischen Induktionsstrom im Prüfteil (7) erzeugenden Induktors (1) zueinander, wobei eine mittels einer Rechnereinrichtung ausgeführte Auswertung mindestens eines der aufgezeichneten Infrarotbilder und ein mittels einer Projektoreinrichtung (9) auf die Oberfläche des Prüfteils (7) erfolgendes Projizieren jeweils eines einem Ergebnis der Auswertung entsprechenden Hinweises (11) für die Prüfperson ausführbar sind, **dadurch gekennzeichnet, dass** ein Hinweis während oder nach der Messung anzeigt, ob die Messung hinsichtlich einer geforderten Fehlerauffindwahrscheinlichkeit unter Berücksichtigung von Messparametern korrekt ausgeführt wird oder wurde.

18. Vorrichtung nach Anspruch 17, **dadurch gekennzeichnet, dass** die Rechnereinrichtung mittels von der zu erfassenden Größe eines Materialfehlers abhängigen Fehlerauffindwahrscheinlichkeitskurven unter Berücksichtigung der Messparameter die Fehlerauffindwahrscheinlichkeit der Messung bestimmt.

19. Vorrichtung nach Anspruch 17 oder 18, **dadurch gekennzeichnet, dass** die Rechnereinrichtung die Auswertung mindestens eines der aufgezeichneten Infrarotbilder zur Berechnung der Messparameter der Messung ausführt.

20. Vorrichtung nach Anspruch 19, **dadurch gekennzeichnet, dass** zur Berechnung von Messparametern die Auswertung eines Infrarotbildes (0) des Prüfteils (7) ohne Induktor ausgeführt wird.

21. Vorrichtung nach Anspruch 19 oder 20, **dadurch gekennzeichnet, dass** zur Berechnung von Messparametern die Auswertung eines vor der Induktion des Induktionsstroms aufgenommenen Infrarotbildes (I) des positionierten Induktors und des Prüfteils (7) ausgeführt wird.

22. Vorrichtung nach Anspruch 19, 20 oder 21, **dadurch gekennzeichnet, dass** zur Berechnung von Messparametern die Auswertung eines mittels Puls-Phasen-Analyse der während der Messung aufgenommenen Infrarotbilder erzeugten Amplitudenbildes (A) ausgeführt wird.

23. Vorrichtung nach Anspruch 19, 20, 21 oder 22, **dadurch gekennzeichnet, dass** zur Berechnung von Messparametern die Auswertung eines mittels Puls-Phasen-Analyse der während der Messung aufgenommenen Infrarotbilder erzeugten Phasenbildes (P) ausgeführt wird.

24. Vorrichtung nach einem der vorangehenden Ansprüche 17 bis 23, **dadurch gekennzeichnet, dass** Messparameter der Abstand zwischen Induktor und Prüfteil, der Messbereich des Induktors und/oder die Orientierung des Induktors gegenüber dem Prüfteil sind/ist.

25. Vorrichtung nach Anspruch 24, **dadurch gekennzeichnet, dass** als ein Hinweis während oder nach der Messung senkrecht zur Orientierung des Induktors verlaufende Linien auf das Prüfteil projiziert werden zur Anzeige, dass entlang der Linien sich erstreckende Materialfehler mit einer maximalen Fehlerauffindwahrscheinlichkeit erfasst werden oder wurden.

26. Vorrichtung nach Anspruch 24, **dadurch gekennzeichnet, dass** als ein Hinweis während oder nach der Messung farbkodierte Flächen auf das Prüfteil projiziert werden zur Anzeige, dass in den jeweiligen Farbflächen sich in bestimmte Richtungen sich erstreckende Materialfehler mit einer maximalen Fehlerauffindwahrscheinlichkeit erfasst werden oder wurden.

27. Vorrichtung nach Anspruch 25 oder 26, **dadurch gekennzeichnet, dass** nach der Messung die Orientierung des Induktors verändert und eine weitere Messung ausgeführt wird, wobei zusätzlich weitere senkrecht zur veränderten Orientierung des Induktors verlaufende Linien oder weitere farbkodierte Flächen auf das Prüfteil projiziert werden.

28. Vorrichtung nach einem der vorangehenden Ansprüche 16 bis 27, **dadurch gekennzeichnet, dass** ein Hinweis während oder nach der Messung anzeigt, ob bei Bekanntsein der Geometrie des Induktors, dessen Lage gegenüber dem Prüfteil und aller Messparameter die Messparameter der Messung korrekt eingestellt sind oder waren.

**29.** Vorrichtung nach Anspruch 28, **dadurch gekennzeichnet, dass** ein Hinweis den Messbereich des Induktors in Abhängigkeit von dessen Relativposition zum Prüfteil als farbige Fläche auf dem Prüfteil anzeigt.

**30.** Vorrichtung nach Anspruch 28 oder 29, **dadurch gekennzeichnet, dass** ein Hinweis während oder nach der Messung die Korrektheit des Abstandes zwischen Induktor und Prüfteil mittels einer bestimmten Farbe der farbigen Fläche anzeigt.

**31.** Vorrichtung nach Anspruch 29, **dadurch gekennzeichnet, dass** gleiche Messbereiche von Messungen mit unterschiedlichen Orientierungen des Induktors überlappend angezeigt werden.

**32.** Vorrichtung nach einem der vorangehenden Ansprüche 16 bis 31, **dadurch gekennzeichnet, dass** ein Hinweis eine Information zur Qualität der Positionierung des Induktors anzeigt.

**Claims**

**1.** Method for scanning induction thermography for nondestructive material examination of a test specimen (7), in which the test specimen (7) and an inductor (1) which has an infrared camera (5), which records infrared images, and generates an electric induction current in the test specimen (7) are positioned relative to one another by a testing technician during a manual measurement, wherein an evaluation, carried out by means of a computer device, of at least one of the recorded infrared images, and a projection, performed by means of a projector device (9) onto the surface of the test specimen (7), of in each case one indication (11) for the testing technician which corresponds to a result of the evaluation are carried out, **characterized in that** an indication during or after the measurement indicates whether the measurement is or has been carried out correctly in respect of a required defect detection probability, taking account of measurement parameters.

**2.** Method according to Claim 1, **characterized in that** the computer device determines the defect detection probability of the measurement by means of defect detection probability curves depending on the magnitude, which is to be acquired, of a material defect while taking account of the measurement parameters.

**3.** Method according to Claim 1 or 2, **characterized in**

**that** the computer device carries out the evaluation of at least one of the recorded infrared images in order to calculate the measurement parameters of the measurement.

**4.** Method according to Claim 3, **characterized in that** the evaluation of an infrared image (0) of the test specimen (7) is carried out without an inductor in order to calculate measurement parameters.

**5.** Method according to Claim 3 or 4, **characterized in that** in order to calculate measurement parameters the evaluation of an infrared image (I), recorded before the induction of the induction current, of the positioned inductor and of the test specimen (7) is carried out.

**6.** Method according to Claim 3, 4 or 5, **characterized in that** in order to calculate measurement parameters the evaluation of an amplitude image (A) generated by means of pulse-phase analysis of the infrared images recorded during the measurement is carried out.

**7.** Method according to Claim 3, 4, 5 or 6, **characterized in that** in order to calculate measurement parameters the evaluation of a phase image (P) generated by means of pulse-phase analysis of the infrared images recorded during the measurement is carried out.

**8.** Method according to one of the preceding Claims 1 to 7, **characterized in that** measurement parameter(s) is/are the distance between inductor and test specimen, the measurement range of the inductor and/or the orientation of the inductor with respect to the test specimen.

**9.** Method according to Claim 8, **characterized in that** as an indication lines running perpendicular to the orientation of the inductor are projected onto the test specimen during or after the measurement in order to indicate that material defects extending along the lines are or have been acquired with a maximum defect detection probability.

**10.** Method according to Claim 8, **characterized in that** as an indication color-coded areas are projected onto the test specimen during or after the measurement in order to indicate that material defects extending in specific directions in the respective colored areas are or have been acquired with a maximum defect detection probability.

**11.** Method according to Claim 9 or 10, **characterized in that** the orientation of the inductor is changed after the measurement and a further measurement is carried out, further lines running perpendicular to the changed orientation of the inductor or further color-coded areas additionally being projected onto the test specimen.

12. Method according to one of the preceding claims, **characterized in that** an indication during or after the measurement indicates whether the measurement parameters of the measurement are or have been correctly set, given that the geometry of the inductor, the position of the latter with respect to the test specimen, and all the measurement parameters are known.

13. Method according to Claim 12, **characterized in that** an indication indicates the measurement range of the inductor as a colored area on the test specimen as a function of the position of said inductor relative to the test specimen.

14. Method according to Claim 12 or 13, **characterized in that** an indication indicates the correctness of the distance between inductor and test specimen during or after the measurement by means of a specific color of the colored area.

15. Method according to Claim 13, **characterized in that** identical measurement ranges of measurements with different orientations of the inductor are indicated in an overlapping fashion.

16. Method according to one of the preceding claims, **characterized in that** an indication indicates an information item relating to the quality of the positioning of the inductor.

17. Device for scanning induction thermography for nondestructive material examination of a test specimen (7), in which the test specimen (7) and an inductor (1) which has an infrared camera (5), which records infrared images, and generates an electric induction current in the test specimen (7) are positioned relative to one another by a testing technician during a manual measurement, wherein an evaluation, carried out by means of a computer device, of at least one of the recorded infrared images, and a projection, performed by means of a projector device (9) onto the surface of the test specimen (7), of in each case one indication (11) for the testing technician which corresponds to a result of the evaluation can be carried out, **characterized in that** an indication during or after the measurement indicates whether the measurement is or has been carried out correctly in respect of a required defect detection probability, taking account of measurement parameters.

18. Device according to Claim 17, **characterized in that** the computer device determines the defect detection probability of the measurement by means of defect detection probability curves depending on the magnitude, which is to be acquired, of a material defect while taking account of the measurement parameters.

19. Device according to Claim 17 or 18, **characterized in that** the computer device carries out the evaluation of at least one of the recorded infrared images in order to calculate the measurement parameters of the measurement.

20. Device according to Claim 19, **characterized in that** the evaluation of an infrared image (0) of the test specimen (7) is carried out without an inductor in order to calculate measurement parameters.

21. Device according to Claim 19 or 20, **characterized in that** in order to calculate measurement parameters the evaluation of an infrared image (I), recorded before the induction of the induction current, of the positioned inductor and of the test specimen (7) is carried out.

22. Device according to Claim 19, 20 or 21, **characterized in that** in order to calculate measurement parameters the evaluation of an amplitude image (A) generated by means of pulse-phase analysis of the infrared images recorded during the measurement is carried out.

23. Device according to Claim 19, 20, 21 or 22, **characterized in that** in order to calculate measurement parameters the evaluation of a phase image (P) generated by means of pulse-phase analysis of the infrared images recorded during the measurement is carried out.

24. Device according to one of the preceding Claims 17 to 23, **characterized in that** measurement parameter(s) is/are the distance between inductor and test specimen, the measurement range of the inductor and/or the orientation of the inductor with respect to the test specimen.

25. Device according to Claim 24, **characterized in that** as an indication lines running perpendicular to the orientation of the inductor are projected onto the test specimen during or after the measurement in order to indicate that material defects extending along the lines are or have been acquired with a maximum defect detection probability.

26. Device according to Claim 24, **characterized in that** as an indication color-coded areas are projected onto the test specimen during or after the measurement in order to indicate that material defects extending in specific directions in the respective colored areas are or have been acquired with a maximum defect detection probability.

**27.** Device according to Claim 25 or 26, **characterized in that** the orientation of the inductor is changed after the measurement and a further measurement is carried out, further lines running perpendicular to the changed orientation of the inductor or further color-coded areas additionally being projected onto the test specimen.

**28.** Device according to one of the preceding Claims 16 to 27, **characterized in that** an indication during or after the measurement indicates whether the measurement parameters of the measurement are or have been correctly set, given that the geometry of the inductor, the position of the latter with respect to the test specimen, and all the measurement parameters are known.

**29.** Device according to Claim 28, **characterized in that** an indication indicates the measurement range of the inductor as a colored area on the test specimen as a function of the position of said inductor relative to the test specimen.

**30.** Device according to Claim 28 or 29, **characterized in that** an indication indicates the correctness of the distance between inductor and test specimen during or after the measurement by means of a specific color of the colored area.

**31.** Device according to Claim 29, **characterized in that** identical measurement ranges of measurements with different orientations of the inductor are indicated in an overlapping fashion.

**32.** Device according to one of the preceding Claims 16 to 31, **characterized in that** an indication indicates an information item relating to the quality of the positioning of the inductor.

**Revendications**

**1.** Procédé de thermographie par induction avec scannage pour le contrôle non destructif du matériau d'une éprouvette (7), au moyen d'un positionnement relatif l'un par rapport à l'autre, effectué par un expérimentateur pendant une mesure manuelle, de l'éprouvette (7) et d'un inducteur (1) présentant une caméra infrarouge (5) enregistrant des images infrarouges et produisant un courant électrique induit dans l'éprouvette (7), dans lequel on effectue une analyse d'au moins une des images infrarouges enregistrées au moyen d'une unité de calcul et une projection effectuée au moyen d'un dispositif de projection (9) sur la surface de l'éprouvette (7) respectivement d'une indication (11) correspondant à un résultat de l'analyse à l'intention de l'expérimentateur, **caractérisé en ce qu'**une indication affiche, pendant ou après la mesure, si la mesure est ou a été effectuée correctement par rapport à une probabilité de découverte de défauts demandée en tenant compte de paramètres de mesure.

**2.** Procédé selon la revendication 1, **caractérisé en ce que** le dispositif de calcul détermine, au moyen de courbes de probabilité de découverte de défauts dépendant de la taille à détecter d'un défaut du matériau, en tenant compte des paramètres de mesure, la probabilité de découverte de défauts de la mesure.

**3.** Procédé selon la revendication 1 ou 2, **caractérisé en ce que** le dispositif de calcul effectue l'analyse d'au moins une des images infrarouges enregistrées pour le calcul des paramètres de mesure de la mesure.

**4.** Procédé selon la revendication 3, **caractérisé en ce que**, pour le calcul de paramètres de mesure, on effectue l'analyse d'une image infrarouge (0) de l'éprouvette (7) sans inducteur.

**5.** Procédé selon la revendication 3 ou 4, **caractérisé en ce que**, pour le calcul de paramètres de mesure, on effectue l'analyse d'une image infrarouge (I) de l'inducteur positionné et de l'éprouvette (7) prise avant l'induction du courant induit.

**6.** Procédé selon la revendication 3, 4 ou 5, **caractérisé en ce que**, pour le calcul de paramètres de mesure, on effectue l'analyse d'une image d'amplitude (A) produite au moyen d'une analyse de phase pulsée des images infrarouges enregistrées pendant la mesure.

**7.** Procédé selon la revendication 3, 4, 5 ou 6, **caractérisé en ce que**, pour le calcul de paramètres de mesure, on effectue l'analyse au moyen d'une image de phase (P) produite au moyen d'une analyse de phase pulsée des images infrarouges enregistrées pendant la mesure.

**8.** Procédé selon l'une quelconque des revendications 1 à 7, **caractérisé en ce que** des paramètres de mesure sont la distance entre l'inducteur et l'éprouvette, le domaine de mesure de l'inducteur et/ou l'orientation de l'inducteur par rapport à l'éprouvette.

**9.** Procédé la revendication 8, **caractérisé en ce que** l'on projette comme indication pendant ou après la mesure sur l'éprouvette des lignes s'étendant perpendiculairement à l'orientation de l'inducteur afin d'afficher que des défauts du matériau s'étendant le long des lignes sont ou ont été détectés avec une probabilité de découverte de défauts maximale.

**10.** Procédé selon la revendication 8, **caractérisé en ce que** l'on projette comme indication pendant ou après la mesure sur l'éprouvette des faces de couleur codées afin d'afficher que des défauts du matériau s'étendant dans des directions déterminées dans les faces de couleur respectives sont ou ont été détectés avec une probabilité de découverte de défauts maximale.

**11.** Procédé selon la revendication 9 ou 10, **caractérisé en ce que** l'on modifie après la mesure l'orientation de l'inducteur et on effectue une autre mesure, dans lequel on projette en plus sur l'éprouvette d'autres lignes s'étendant perpendiculairement à l'orientation modifiée de l'inducteur ou d'autres faces de couleur codées.

**12.** Procédé selon l'une quelconque des revendications précédentes, **caractérisé en ce que** l'indication affiche, pendant ou après la mesure, si, en connaissant la géométrie de l'inducteur, sa position par rapport à l'éprouvette et tous les paramètres de mesure, les paramètres de mesure de la mesure sont ou étaient réglés correctement.

**13.** Procédé selon la revendication 12, **caractérisé en ce qu'**une indication affiche le domaine de mesure de l'inducteur en fonction de sa position relative par rapport à l'éprouvette sous forme de face colorée sur l'éprouvette.

**14.** Procédé la revendication 12 ou 13, **caractérisé en ce qu'**une indication affiche pendant ou après la mesure le caractère correct de la distance entre l'inducteur et l'éprouvette au moyen d'une couleur déterminée de la face colorée.

**15.** Procédé la revendication 13, caractérisé en ce l'on affiche en recouvrement des domaines de mesure identiques de mesures avec différentes orientations de l'inducteur.

**16.** Procédé selon l'une quelconque des revendications précédentes, **caractérisé en ce qu'**une indication affiche une information sur la qualité du positionnement de l'inducteur.

**17.** Dispositif de thermographie par induction avec scannage pour le contrôle non destructif du matériau d'une éprouvette (7), au moyen d'un positionnement relatif l'un par rapport à l'autre, effectué par un expérimentateur pendant une mesure manuelle, de l'éprouvette (7) et d'un inducteur (1) présentant une caméra infrarouge (5) enregistrant des images infrarouges et produisant un courant électrique induit dans l'éprouvette (7), dans lequel on effectue une analyse d'au moins une des images infrarouges enregistrées au moyen d'une unité de calcul et une projection effectuée au moyen d'un dispositif de projection (9) sur la surface de l'éprouvette (7) respectivement d'une indication (11) correspondant à un résultat de l'analyse à l'intention de l'expérimentateur, **caractérisé en ce qu'**une indication affiche, pendant ou après la mesure, si la mesure est ou a été effectuée correctement par rapport à une probabilité de découverte de défauts demandée en tenant compte de paramètres de mesure.

**18.** Dispositif selon la revendication 17, **caractérisé en ce que** le dispositif de calcul détermine, au moyen de courbes de probabilité de découverte de défauts dépendant de la taille à détecter d'un défaut du matériau, en tenant compte des paramètres de mesure, la probabilité de découverte de défauts de la mesure.

**19.** Dispositif selon la revendication 17 ou 18, **caractérisé en ce que** le dispositif de calcul effectue l'analyse d'au moins une des images infrarouges enregistrées pour le calcul des paramètres de mesure de la mesure.

**20.** Dispositif selon la revendication 19, **caractérisé en ce que**, pour le calcul de paramètres de mesure, on effectue l'analyse d'une image infrarouge (0) de l'éprouvette (7) sans inducteur.

**21.** Dispositif selon la revendication 19 ou 20, **caractérisé en ce que**, pour le calcul de paramètres de mesure, on effectue l'analyse d'une image infrarouge (I) de l'inducteur positionné et de l'éprouvette (7) prise avant l'induction du courant induit.

**22.** Dispositif selon la revendication 19, 20 ou 21, **caractérisé en ce que**, pour le calcul de paramètres de mesure, on effectue l'analyse d'une image d'amplitude (A) produite au moyen d'une analyse de phase pulsée des images infrarouges enregistrées pendant la mesure.

**23.** Dispositif selon la revendication 19, 20, 21 ou 22, **caractérisé en ce que**, pour le calcul de paramètres de mesure, on effectue l'analyse au moyen d'une image de phase (P) produite au moyen d'une analyse de phase pulsée des images infrarouges enregistrées pendant la mesure.

**24.** Dispositif selon l'une quelconque des revendications 17 à 23, **caractérisé en ce que** des paramètres de mesure sont la distance entre l'inducteur et l'éprouvette, le domaine de mesure de l'inducteur et/ou l'orientation de l'inducteur par rapport à l'éprouvette.

**25.** Dispositif selon la revendication 24, **caractérisé en ce que** l'on projette comme indication pendant ou après la mesure sur l'éprouvette des lignes s'étendant perpendiculairement à l'orientation de l'inducteur afin d'afficher que des défauts du matériau s'étendant le long des lignes sont ou ont été détectés avec une probabilité de découverte de défauts maximale.

26. Dispositif selon la revendication 24, **caractérisé en ce que** l'on projette comme indication pendant ou après la mesure sur l'éprouvette des faces de couleur codées afin d'afficher que des défauts du matériau s'étendant dans des directions déterminées dans les faces de couleur respectives sont ou ont été détectés avec une probabilité de découverte de défauts maximale.

27. Dispositif selon la revendication 25 ou 26, **caractérisé en ce que** l'on modifie après la mesure l'orientation de l'inducteur et on effectue une autre mesure, dans lequel on projette en plus sur l'éprouvette d'autres lignes s'étendant perpendiculairement à l'orientation modifiée de l'inducteur ou d'autres faces de couleur codées.

28. Dispositif selon l'une quelconque des revendications précédentes 16 à 27, **caractérisé en ce que** l'indication affiche, pendant ou après la mesure, si, en connaissant la géométrie de l'inducteur, sa position par rapport à l'éprouvette et tous les paramètres de mesure, les paramètres de mesure de la mesure sont ou étaient réglés correctement.

29. Dispositif selon la revendication 28, **caractérisé en ce qu'**une indication affiche le domaine de mesure de l'inducteur en fonction de sa position relative par rapport à l'éprouvette sous forme de face colorée sur l'éprouvette.

30. Dispositif selon la revendication 28 ou 29, **caractérisé en ce qu'**une indication affiche pendant ou après la mesure le caractère correct de la distance entre l'inducteur et l'éprouvette au moyen d'une couleur déterminée de la face colorée.

31. Dispositif selon la revendication 29, caractérisé en ce l'on affiche en recouvrement des domaines de mesure identiques de mesures avec différentes orientations de l'inducteur.

32. Dispositif selon l'une quelconque des revendications précédentes 16 à 31, **caractérisé en ce qu'**une indication affiche une information sur la qualité du positionnement de l'inducteur.

FIG 1

FIG 2

EP 2 812 656 B1

FIG 3

FIG 4

EP 2 812 656 B1

FIG 5

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011098162 A1

**In der Beschreibung aufgeführte Nicht-Patentliteratur**

- **L. BIENKOWSKI et al.** Hybrid Camera and Real-View Thermography for Nondesturtive Evaluation. *11th International Conference on Quantitative Infra-Red Thermography,* 11. Juni 2012

- Eddy-current induced thermography - probability of detection study of small fatigue cracks in steel, titanium and nickel-based superalloy. **WEEKES BEN.** NDT&E International. Butterworth-Heinemann, vol. 49, 47-56